# EUROPÄISCHE PATENTANMELDUNG

(11) **EP 1 972 943 A2**
(43) Veröffentlichungstag der Anmeldung: **24.09.2008**
(21) Anmeldenummer: 07017176.4
(22) Anmeldetag: 01.09.2007
(51) Int. Cl.: G01N 35/02, G01N 33/49

(54) **Anlage zur Durchführung von Blutanalysen**

(30) Priorität: 06.09.2006 DE 102006041695
(71) Anmelder: Leuze electronic GmbH + Co. KG, 73277 Owen/Teck (DE)
(72) Erfinder: Amler, Andreas, 72660 Beuren (DE); Gseller, Rolf, 73230 Kirchheim / Teck (DE); Eßlinger, Dieter, 73274 Notzingen (DE)
(74) Vertreter: Ruckh, Rainer Gerhard

(57) **Zusammenfassung**

Die Erfindung betrifft eine Anlage (1) zur Durchführung von Blutanalysen. Diese Anlage (1) umfasst ein Fördersystem zum Transport von Blutproben enthaltenden Probenröhrchen (5) zu vorgegebenen Analysestationen (2). Die Probenröhrchen (5) werden auf dem Fördersystem in jeweils einen Transponder (10) enthaltenden Transportbehälter (6) transportiert. In den Transpondern (10) sind jeweils probenspezifische Informationen abgespeichert, anhand derer der Transport der Transportbehälter (6) mit den Probenröhrchen (5) steuerbar ist.

## Beschreibung

Die Erfindung betrifft eine Anlage zur Durchführung von Blutanalysen gemäß dem Oberbegriff des Anspruchs 1.

Derartige Anlagen umfassen generell ein Fördersystem, welches bevorzugt ein Förderband aufweist, auf welchem in Transportbehältern angeordnete Probenröhrchen verschiedenen Analysestationen zugeführt werden. Die Probenröhrchen enthalten jeweils Blutproben, die in den einzelnen Analysestationen untersucht werden. Die Transportbehälter zur Aufnahme der Probenröhrchen sind als sogenannte Pucks ausgebildet. Diese Transportbehälter weisen eine im wesentlichen kreiszylindrische Seitenwand und einen auf dem Förderband aufstellbaren Boden auf. Im Boden des Transportbehälters kann eine Bohrung vorgesehen sein, über welche Flüssigkeit austreten kann. An der Oberseite sind diese Pucks offen, so dass über diese Öffnung jeweils ein Probenröhrchen in einen Puck eingestellt werden kann. Um ein Verkippen der Transportbehälter mit den darin gelagerten Proberöhrchen zu vermeiden bestehen die Transportbehälter aus Metall und weisen so ein hohes Eigengewicht auf.

Eine wesentliche Anforderung bei diesen Anlagen besteht in einer fehlerfreien und eindeutigen Identifikation der Proben, damit einerseits für die jeweilige Probe exakt die erforderlichen Analysen durchgeführt werden und andererseits die Probe fehlerfrei dem jeweiligen Patienten zugeordnet werden kann.

Um eine derartige Identifikation der Proben zu gewährleisten, sind die einzelnen Proben mit Barcodes gekennzeichnet. Anhand der dort enthaltenen Informationen ist eine Zuordnung der Probe zum jeweiligen Patienten möglich. Zudem sind dort auch die Informationen über die durchzuführenden Analysen enthalten.

Obwohl damit in den Barcodes, die auf den Probenröhrchen aufgebracht sind, umfangreiche Informationen über die durchzuführenden Analysen enthalten sind, reicht diese Kennzeichnung alleine nicht aus, um einen eindeutig nachvollziehbaren Transport der Probenröhrchen durch die Anlage zu gewährleisten. Dies beruht darauf, dass spezifische Informationen über den Transport der Probenröhrchen in den Transportbehältern und damit anlagenspezifische Informationen in den Barcodes der Probenröhrchen nicht enthalten sind. Derartige Informationen sind bei bekannten Anlagen zur Blutanalyse in Form von weiteren Barcodes auf den Mantelflächen der Transportbehälter aufgebracht. Während des Transports auf dem Fördersystem werden diese Barcodes von Barcodelesegeräten gelesen, wobei in Abhängigkeit der von den Barcodes ausgelesenen Informationen der Transportfluss der Transportbehälter so gesteuert ist, dass diese mit den Probenröhrchen den gewünschten Zielpositionen, das heißt den spezifischen Analysestationen zugeführt werden.

Ein prinzipieller Nachteil derartiger Systeme besteht darin, dass durch die separate Kennzeichnung von Transportbehältern und Probenröhrchen mit separaten Barcodes prinzipiell Verwechslungen derart auftreten können, dass ein Probenröhrchen einem falschen Transponder zugeordnet wird.

Ein weiterer genereller Nachteil derartiger Systeme besteht darin, dass die Barcodes auf dem Transportbehälter beziehungsweise auf den Probenröhrchen leicht verschmutzen. Da diese Barcodes typischerweise während der gesamten Transportdauer von mehreren Barcodelesegeräten an unterschiedlichen Positionen des Fördersystems gelesen werden müssen, besteht eine gewisse Gefahr von Fehllesungen.

Ein weiterer Nachteil derartiger Systeme besteht darin, dass bei einem Lesevorgang eines Barcodes auf einem Transportbehälter dieser Transportbehälter auf dem Fördersystem ausgerichtet werden muss, damit der Barcode von einem Barcodelesegerät detektiert werden kann. Dies beruht darauf, dass die Barcodes auf den Mantelflächen der Transportbehälter aufgebracht sind. Während des Transports der Transportbehälter auf dem Förderband kann sich die Lage des Transportbehälters ändern. Somit ist in den meisten Fällen bei Erreichen eines Barcodelesegeräts der Transportbehälter nicht so orientiert, dass der darauf angeordnete Barcode in Richtung des Barcodelesegeräts zeigt. Damit ein Lesen des Barcodes möglich ist, muss der Transportbehälter gedreht werden, so dass der Barcode dem Barcodelesegerät zugewandt ist. Das Vorsehen derartiger Dreh- und Ausrichtvorrichtungen am Fördersystem ist jedoch konstruktiv aufwändig und äußerst kostenintensiv.

Der Erfindung liegt die Aufgabe zugrunde eine Anlage der eingangs genannten Art so auszubilden, dass mit geringem konstruktivem Aufwand eine eindeutige Identifizierung von Proben bei deren Transport durch die Anlage gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben

Die Erfindung betrifft eine Anlage zur Durchführung von Blutanalysen. Diese Anlage umfasst ein Fördersystem zum Transport von Blutproben enthaltenden Probenröhrchen zu vorgegebenen Analysestationen. Die Probenröhrchen werden auf dem Fördersystem in jeweils einen Transponder enthaltenden Transportbehälter transportiert. In den Transpondern sind jeweils probenspezifische Informationen abgespeichert, anhand derer der Transport der Transportbehälter mit den Probenröhrchen steuerbar ist.

Ein wesentlicher Vorteil der Erfindung besteht darin, dass die in den Transportbehältern enthaltenen Informationen mit RFID-Lesegeräten als Bestandteilen eines RFID-Systems sicher und zuverlässig auch bei vorhandenen Verschmutzungen oder sogar leichten Beschädigungen der Transportbehälter ausgelesen werden können. Das von den Transpondern und den zugeordneten RFID-Lesegeräten gebildete RFID-System bildet somit ein robustes und störungssicheres System zum Speichern und Abrufen von Informationen, die für einen fehlerfreien Transport der Probenröhrchen mit den Transportbehältern zu den einzelnen Analysestationen notwendig sind.

Ein weiterer wesentlicher Vorteil der Erfindung besteht darin, dass die in einem Transponder enthaltenen Informationen von einem RFID-Lesegerät unabhängig von der Orientierung des den Transponder aufnehmenden Transportbehälters relativ zum RFID-Lesegerät ausgelesen werden können. Damit ist insbesondere ein Verdrehen des Transportbehälters während des Transports auf dem Fördersystem unkritisch, da die in dem Transponder dieses Transportbehälters enthaltenen Informationen unabhängig von der Drehposition des Transportbehälters vom RFID-Lesegerät ausgelesen werden können.

In einer besonders vorteilhaften Ausführungsform der Erfindung ist der Transponder im Boden des jeweiligen Transportbehälters integriert. In diesem Fall kann das jeweilige RFID-Lesegerät platzsparend unterhalb des vorteilhaft als Förderband ausgebildeten Fördersystems angebracht sein, um dann von unten die Informationen aus dem Transponder des jeweiligen Transportbehälters auslesen zu können.

In einer besonders vorteilhaften Ausführungsform werden vorzugsweise bevor ein Transportbehälter mit einem Probenröhrchen auf das Fördersystem geführt wird, die die Probe kennzeichnenden Informationen, die in einem Barcode auf dem Probenröhrchen kodiert sind, von diesem Barcode ausgelesen und dann in den Transponder des Transportbehälters eingeschrieben, welcher dieses Probenröhrchen aufnimmt. Die Daten der Barcodes auf den Proberöhrchen sind fortlaufende Nummern, die im Labor beziehungsweise in der Arztpraxis vergeben werden. Zusätzlich können im Transponder vorab Steuerinformationen hinterlegt sein, anhand derer die Zielpositionen angefahren werden können.

In einer besonders vorteilhaften Ausgestaltung der Erfindung werden die Daten der einzelnen Blutanalysen, die für eine Probe in den einzelnen Analysestationen gewonnen werden, in den Transponder des Transportbehälters eingelesen, welcher das jeweilige Probenröhrchen transportiert. Hierzu sind vorteilhaft in den einzelnen Analysestationen beziehungsweise an der Stoppstelle des Fördersystems unmittelbar vor der Analysestation entsprechende Sende- und Empfangseinheiten integriert. Da die Analysedaten, die in einer Analysestation für eine Probe gewonnen werden, unmittelbar in den Transponder der diese Probe führenden Transportbehälter eingelesen wird, werden fehlerhafte Zuordnungen der Analayseergebnisse mit hoher Sicherheit vermieden.

Weiterhin werden insbesondere auch durch das Einlesen der Barcode-Informationen in den Transponder Verwechslungen der Probenröhrchen und insbesondere fehlerhafte Zuordnungen von Probenröhrchen zu den jeweiligen Transportbehältern vermieden. Damit wird die Fehlersicherheit bei der Durchführung der Blutanalysen der einzelnen Proben erheblich erhöht.

Ein weiterer wesentlicher Vorteil der Erfindung besteht darin, dass durch das Einlesen der Barcode-Informationen eines Probenröhrchens in den Transponder des zugeordneten Transportbehälters nur einmal das Lesen des Barcodes erforderlich ist, nämlich dann, wenn deren Informationen in den Transponder übertragen werden. Während des Transports durch die Anlage und auch beim Ausschleusen der Probe aus der Anlage müssen dann nur noch mittels der über die Anlage verteilten RFID-Lesegeräte die Transponder ausgelesen werden. Dort ist ein Lesen des Barcodes am Probenröhrchen nicht erforderlich. Dies stellt eine wesentliche Vereinfachung dar, wobei insbesondere eine Ausrichtung der Probenröhrchen mit den Barcodes während des Transports entfällt.

Besonders vorteilhaft sind die einzelnen RFID-Lesegeräte im Bereich von Weichen angeordnet, an welchen je nach Weichenstellung ein Transportbehälter mit einem Probenröhrchen einer Analysestation zugeführt wird oder an dieser vorbeigeführt wird. Die Weichenstellung wird dabei in Abhängigkeit der aus dem Transponder des Transportbehälters ausgelesenen Informationen vorgegeben. Das so ausgebildete Transportsystem weist einerseits einen konstruktiv einfachen Aufbau auf und ermöglicht zudem eine fehlerfreie und zuverlässige Zuführung der Probenröhrchen zu den einzelnen Analysestationen.

Die Erfindung wird im Nachstehenden anhand der .Zeichnungen erläutert. Es zeigen
- Figur 1:: Ausführungsbeispiel einer Anlage zur Durchführung von Blutanalysen
- Figur 2:: Schematische Darstellung eines Transportbehälters als Transportmittel für die Anlage gemäß Figur 1
- Figur 3:: Transportbehälter gemäß Figur 2 mit einem darin gelagerten Probenröhrchen.

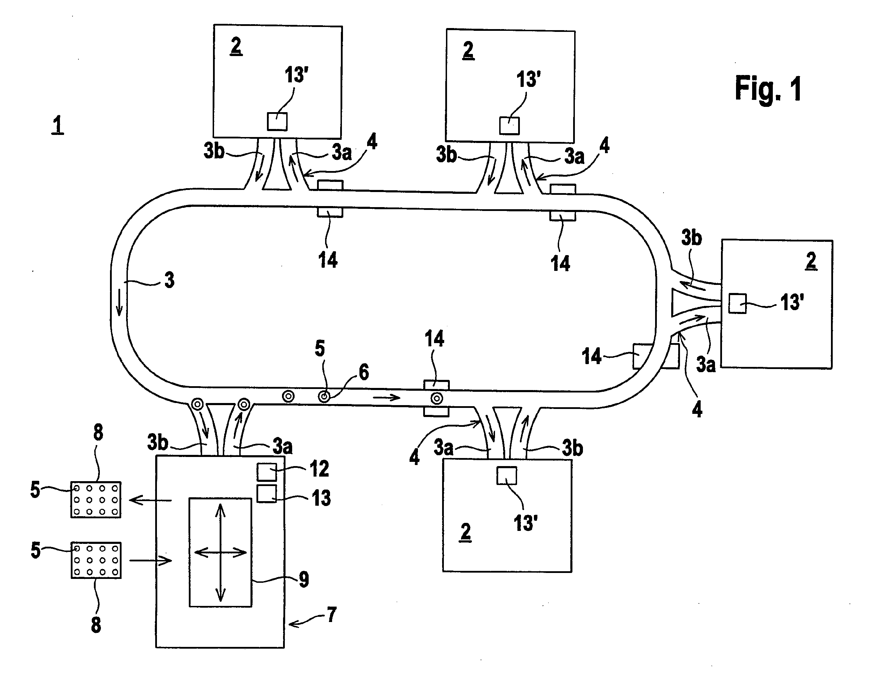

Figur 1 zeigt schematisch den Aufbau einer Anlage 1 zur Durchführung von Blutanalysen. Die Anlage umfasst mehrere, im vorliegenden Fall vier Analysestationen 2, in welchen unterschiedliche Blutuntersuchungen durchgeführt werden können. Die Analysestationen 2 sind über ein Fördersystem miteinander verbunden. Das Fördersystem besteht im wesentlichen aus einem Förderband 3, welches entlang einer geschlossenen Bahn umläuft. Weiterhin weist das Fördersystem mehrere Weichen 4 auf An einer derartigen Weiche 4 zweigen jeweils Förderbandsegmente 3a, b zu einer Analysestation 2 ab.

Die zu analysierenden Proben sind, wie in Figur 1 schematisch dargestellt in Probenröhrchen 5 eingefüllt. Dabei ist jedes Probenröhrchen 5 in einem Transportbehälter 6 gelagert, welche auf dem Fördersystem transportiert wird. Der Transportbehälter 6 mit dem Probenröhrchen 5 läuft auf dem Förderband 3 um und wird nach Bedarf über ein Förderbandsegment 3a einer Analysestation 2 zur Durchführung einer spezifischen Analyse zugeführt. Anschließend wird der Transportbehälter 6 über das Förderbandsegment 3b wieder dem Förderband 3 zugeführt. Die Förderrichtungen der Transportbehälter 6 mit den Probenröhrchen 5 sind in Figur 1 mit Pfeilen gekennzeichnet.

Die Anlage umfasst weiterhin eine Ein- und Ausschleußstation 7 über welche die Transportbehälter 6 mit den Probenröhrchen 5 dem Fördersystem zugeführt beziehungsweise von diesem entnommen werden. Auch die Ein- und Ausschleußstation 7 ist über Förderbandsegmente 3a, 3b an das Förderband 3 zur Zufuhr oder Abfuhr der Transportbehälter 6 mit den Probenröhrchen 5 gekoppelt. Die einzelnen Probenröhrchen 5 werden in Behältern 8 der Ein- und Ausschleußstation 7 zugeführt. Die über die Ein- und Ausschleußstation 7 ausgeschleusten Probenröhrchen 5 werden ebenfalls in Behältern 8 gelagert, wie aus Figur 1 ersichtlich ist.

Die Ein- und Ausschleußstation 7 umfasst einen Roboter 9, vorzugsweise einen x-y-Roboter zum Handling der Probenröhrchen 5. Die der Ein- und Ausschleußstation 7 zugeführten Probenröhrchen 5 werden einzeln in Transportbehälter 6 eingesetzt und mit diesen über das Förderbandsegment 3a dem Förderband 3 zugeführt. Entsprechend werden vom Förderband 3 über das Förderbandsegment 3b ausgeschleuste Probenröhrchen 5 aus den Transportbehältern 6 entnommen und dann wieder den Behältern zugeführt.

Zur Steuerung der Anlage, insbesondere des Fördersystems ist eine nicht dargestellte Steuereinheit vorgesehen.

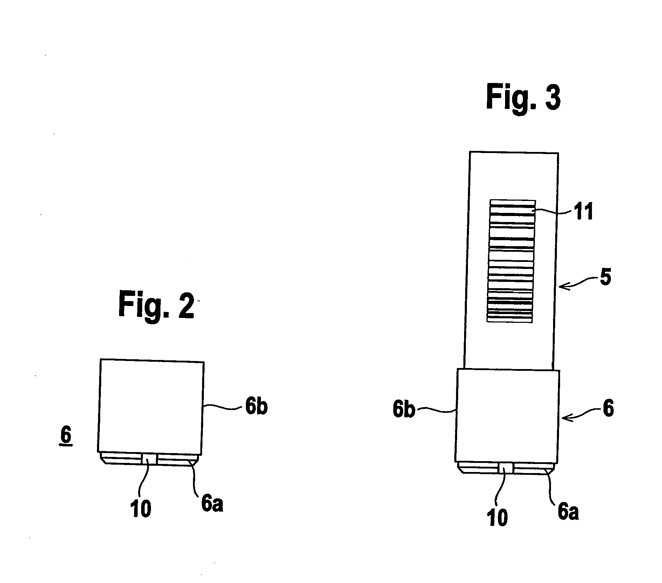

Figur 2 zeigt schematisch den Aufbau eines Transportbehälters 6. Der Transportbehälter 6 ist als sogenannter Puck ausgebildet und weist eine kreiszylindrische Kontur auf Der Transportbehälter 6 weist einen Boden 6a und eine kreiszylindrische Seitenwand 6b auf. An der Oberseite ist der Transportbehälter 6 offen, so dass über die offene Oberseite wie in Figur 3 dargestellt ein Probenröhrchen 5 in den Transportbehälter 6 eingestellt werden kann. Der Transportbehälter 6 besteht im vorliegenden Fall aus Keramik.

Wie aus den Figuren 2 und 3 ersichtlich ist ist in den Boden des Transportbehälters 6 ein Transponder 10 integriert. Derartige Transponder 10, oft auch als Tags bezeichnet, weisen Antennen zum Empfang von Signalen externer Einheiten von RFID-Systemen auf Weiterhin weisen derartige Transponder 10 einen Chip zur Speicherung von Informationen auf. Die Transponder 10 können als aktive oder passive Einheiten ausgebildet sein, je nachdem ob diese eine eigene Energieversorgung aufweisen oder nicht.

Der Innendurchmesser eines Transportbehälters 6 ist so dimensioniert, dass das darin gelagerte Probenröhrchen 5 dort möglichst spielfrei gelagert ist. Wie aus Figur 3 ersichtlich ist auf dem Probenröhrchen 5 ein Barcode 11 aufgebracht. Der Barcode 11 ist so am Probenröhrchen 5 angeordnet, dass dieser vollständig über den Transportbehälter 6 hervorsteht. Dieser Barcode 11 enthält Informationen, die die im Probenröhrchen 5 gelagerte Probe kennzeichnen und identifizieren. Insbesondere enthält der Barcode 11 Informationen über die mit der Probe durchzuführenden Informationen und damit auch die Zielpositionen, das heißt die Analysestationen 2, denen die Probe zuzuführen ist.

Wie aus Figur 1 ersichtlich, ist in der Ein- und Ausschleußstation 7 ein Barcodelesegerät 12 und eine Sende- und Empfangseinheit 13 integriert. Die Sende- und Empfangseinheit 13 bildet neben den Transpondern 10 einen weiteren Bestandteil des RFID-Systems. Die Sende- und Empfangseinheit 13 führt mit einem Transponder 10 eine vorzugsweise bidirektionale Datenübertragung durch, in dem diese Signale im Radio-Frequenzbereich emittiert. Das von der Sende- und Empfangseinheit 13 übertragene Feld kann zudem zur Energieversorgung des Transponders 10 genutzt werden.

Sobald der Roboter 9 ein Probenröhrchen 5 in einen Transponder 10 eingesetzt hat, liest das Barcodelesegerät 12 den Barcode 11 dieses Probenröhrchens 5. Der Inhalt des Barcodes 11 wird dann über die Sende- und Empfangseinheit 13 in den Transponder 10 des Transportbehälters 6, der dieses Probenröhrchen 5 führt, übertragen. Weiterhin können im Transponder 10 weitere Steuerinformationen hinerlegt werden. Die im Transponder 10 hinterlegten Informationen enthalten somit alle Daten, die den Transport des Transportbehälters 6 mit dem zugehörigen Probenröhrchen 5 innerhalb des Fördersystems eindeutig definieren. Insbesondere umfassen die Daten die Zielpositionen, das heißt die Analysestationen 2, die zur Durchführung der Analysen der Probe angesteuert werden müssen.

Wie aus Figur 1 ersichtlich ist vor jeder Weiche 4 ein RFID-Lesegerät 14 angeordnet, mittels dessen die Informationen eines Transponders 10 in einem sich dort aufhaltenden Transportbehälter 6 ausgelesen werden können. Die RFID-Lesegeräte 14 sind bevorzugt baugleich mit der Sende- und Empfangseinheit 13.

Die RFID-Lesegeräte 14 sind jeweils unterhalb des Förderbands 3 angeordnet. Befindet sich ein Transportbehälter 6 mit einem Probenröhrchen 5 auf dem Förderband 3 im Bereich des RFID-Lesegeräts 14, so werden mit diesem von unten die Informationen aus den Transpondern 10 ausgelesen.

In Figur 1 ist in Förderrichtung der Transportbehälter 6 an der vor der ersten Analysestation 2 angeordneten Weiche 4 ein Transportbehälter 6 mit einem Probenröhrchen 5 angeordnet. Ergibt die aus dem Transponder 10 dieses Transportbehälters 6 ausgelesene Information, dass an dieser ersten Analysestation 2 für die Probe im Probenröhrchen 5 keine Analyse durchzuführen ist, so wird der Transportbehälter 6 auf dem Förderband 3 an dieser Analysestation 2 vorbei geführt. Ergibt jedoch die aus dem Transponder 10 ausgelesene Information, dass für die Probe eine Analyse in der ersten Analysestation 2 durchgeführt werden muss, so wird durch eine geeignete Ansteuerung der Weiche 4 über die Steuereinheit in Abhängigkeit der ausgelesenen Information der Transportbehälter 6 mit dem Probenröhrchen 5 dieser Analysestation 2 zugeführt.

In der Analysestation 2 ist wie auch in den weiteren Analysestationen 2 eine Sende- und Empfangseinheit 13' integriert. Mittels dieser Sende- und Empfangseinheit 13' werden die in der Analysestation 2 ermittelten Analyseergebnisse in den Transponder 10 eingeschrieben, so dass diese mit dem zugehörigen Probenröhrchen 5 mitgeführt werden.

Je nach in dem Transponder 10 enthaltenen Steuerinformationen, wird der Transportbehälter 6, in dem der Transponder 10 integriert ist, mit dem zugeordneten Probenröhrchen 5 einer vorgegebenen Anzahl von Analysestationen 2 zur Durchführung unterschiedlicher Analysen zugeführt. Sämtliche Analyseergebnisse können dabei im Transponder 10 des Transportbehälters 6 gespeichert werden.

Nach Durchlaufen des Fördersystems wird dann der Transportbehälter 6 mit dem Probenröhrchen 5 an der Ein- und Ausschleußstation 7 ausgeschleust. Zweckmäßigerweise werden zur Entnahme des Probenröhrchens 5 aus dem Transportbehälter 6 mittels der Sende- und Empfangseinheit 13 die im Transponder 10 enthaltenen Daten ausgelesen und beispielsweise in einer Rechnereinheit gespeichert. Da diese neben den Analyseergebnissen auch die Barcodeinformationen des Probenröhrchens 5 und damit die Kenndaten der Probe enthalten, ist eine eindeutige und fehlersichere Zuordnung der Analyseergebnisse zur Probe gewährleistet.

### Bezugszeichenliste

- (1): Anlage
- (2): Analysestation
- (3): Förderband
- (3a): Förderbandsegment
- (3b): Förderbandsegment
- (4): Weichen
- (5): Probenröhrchen
- (6): Transportbehälter
- (6a): Boden
- (6b): Seitenwand
- (7): Ein- und Ausschleußstation
- (8): Behälter
- (9): Roboter
- (10): Transponder
- (11): Barcode
- (12): Barcodelesegerät
- (13): Sende- und Empfangseinheit
- (13'): Sende- und Empfangseinheit
- (14): RFID-Lesegerät

## Patentansprüche

1. Anlage (1) zur Durchführung von Blutanalysen mit einem Fördersystem zum Transport von Blutproben enthaltenden Probenröhrchen (5) zu vorgegebenen Analysestationen (2), **dadurch gekennzeichnet, dass** die Probenröhrchen (5) auf dem Fördersystem in jeweils einen Transponder (10) enthaltenden Transportbehältern (6) transportiert werden, wobei in den Transpondern (10) jeweils probenspezifische Informationen abgespeichert sind, anhand derer der Transport der Transportbehälter (6) mit den Probenröhrchen (5) steuerbar ist.

2. Anlage (1) nach Anspruch 1, **dadurch gekennzeichnet, dass** an jedem Probenröhrchen (5) ein Barcode (11) angebracht ist, welcher die im Probenröhrchen (5) enthaltene Probe kennzeichnende Informationen enthält, und dass diese Informationen in den Transponder (10) des Transportbehälters (6), in welchem dieses Probenröhrchen (5) transportiert wird, einlesbar sind.

3. Anlage (1) nach Anspruch 2, **dadurch gekennzeichnet, dass** die Erfassung der Barcodes (11) mittels eines Barcodelesegeräts (12) erfolgt, und dass das Einlesen der in einem Barcode (11) enthaltenen Informationen in den Transponder (10) mittels einer Sende- und Empfangseinheit (13) erfolgt.

4. Anlage (1) nach Anspruch 3, **dadurch gekennzeichnet, dass** das Barcodelesegerät (12) und die Sende- und Empfangseinheit (13) in einer Ein- und Ausschleußstation (7) integriert sind, mittels derer die Transportbehälter (6) mit den Probenröhrchen (5) dem Fördersystem zugeführt und aus diesem ausgeführt werden.

5. Anlage (1) nach einem der Ansprüche 1 bis 4, **dadurch gekennzeichnet, dass** in jedem Transponder (10) Steuerinformationen für den Transport eines Transportbehälters (6) abgespeichert sind.

6. Anlage (1) nach Anspruch 5, **dadurch gekennzeichnet, dass** die Steuerinformationen in den Transponder (10) eingelesen werden, bevor der zugeordnete Transportbehälter (6) dem Fördersystem zugeführt wird.

7. Anlage (1) nach einem der Ansprüche 1 bis 6, **dadurch gekennzeichnet, dass** in einen Transponder (10) Daten einer in einer Analysestation (2) durchgeführten Blutanalyse einlesbar sind.

8. Anlage (1) nach Anspruch 7, **dadurch gekennzeichnet, dass** in den einzelnen Analysestationen (2) jeweils eine Sende- und Empfangseinheit (13) zum Einlesen der Daten in den Transponder (10) eines Transportbehälters (6) vorgesehen ist.

9. Anlage (1) nach einem der Ansprüche 1 bis 8, **dadurch gekennzeichnet, dass** das Fördersystem ein entlang einer geschlossenen Bahn umlaufendes Förderband (3) sowie eine vorgegebene Anzahl von Weichen (4), an welchen Abzweigungen vom Förderband (3) zu den einzelnen Analysestationen (2) abzweigen, aufweist, wobei an jeder Weiche (4) ein RFID-Lesegerät (14) angebracht ist, mittels dessen die Informationen eines Transponders (10), der in einem an der Weiche (4) liegenden Transportbehälter (6) angeordnet ist, ausgelesen werden.

10. Anlage (1) nach Anspruch 9, **dadurch gekennzeichnet, dass** in Abhängigkeit der vom Transponder (10) ausgelesenen Informationen die Weichenstellung zur Vorgabe der Transportrichtung des Transportbehälters (6) vorgegeben wird.

11. Anlage (1) nach einem der Ansprüche 1 bis 10, **dadurch gekennzeichnet, dass** die Transponder (10) in den Böden (6a) der Transportbehälter (6) integriert sind.

12. Anlage (1) nach Anspruch 11, **dadurch gekennzeichnet, dass** die Transponder (10) aus Keramik bestehen.

13. Anlage (1) nach einem der Ansprüche 11 oder 12, **dadurch gekennzeichnet, dass** jeder Transponder (10) an seiner Oberseite eine Öffnung aufweist, über welche ein Probenröhrchen (5) in diesen einstellbar ist.

14. Anlage (1) nach Anspruch 13, **dadurch gekennzeichnet, dass** bei einem in einem Transportbehälter (6) stehenden Probenröhrchen (5) dessen Barcode (11) über den oberen Rand des Transportbehälters (6) hervorsteht.

15. Anlage (1) nach einem der Ansprüche 11 bis 14, **dadurch gekennzeichnet, dass** die RFID-Lesegeräe (14) unterhalb des Förderbands (3) angeordnet sind.
